# EUROPÄISCHE PATENTSCHRIFT

(11) **EP 0 655 269 B1**
(45) Veröffentlichungstag und Bekanntmachung des Hinweises auf die Patenterteilung: **13.08.1997**
(21) Anmeldenummer: 94116968.2
(22) Anmeldetag: 27.10.1994
(51) Int. Cl.: B01D 36/00

(54) **Flüssigkeitsfilter für Kraftstoff**
Liquid filter for fuels
Filtre pour carburants liquides

(30) Priorität: 24.11.1993 DE 4340024
(43) Veröffentlichungstag der Anmeldung: 31.05.1995
(73) Patentinhaber: ROBERT BOSCH GMBH, 70442 Stuttgart (DE)
(72) Erfinder: Straubel, Max, Dipl.-Ing., D-70329 Stuttgart (DE); Projahn, Ulrich, Dipl.-Ing., E-28812 Alcala De Henares (ES); Haas, Wolfgang, E-28109 El Soto (Madrid) (ES); Lucas, Bernhard, Dipl.-Ing., E-28812 Alcala De Henares (ES); Delgado, Rafael, E-28034 Madrid (ES); Casillas, Enrique, Ing., E-28017 Madrid (ES); Granda-Trigo, Miguel, Dipl.-Ing., E-28037 Madrid (ES); Ramirez, Eduardo, Ing., E-28804 Alcala de Henares (ES)

(56) Entgegenhaltungen:
- EP-A- 0 547 951
- EP-A- 0 579 484
- DE-A- 3 820 675

## Beschreibung

### Stand der Technik

Die Erfindung geht aus von einem Flüssigkeitsfilter für Kraftstoff nach der im Oberbegriff des Anspruchs 1 näher angegebenen Gattung.

Es ist schon ein solches Flüssigkeitsfilter für Dieselkraftstoff aus der EP 0 547 951 A1 bekannt, das zur Vermeidung von Fahrverhaltensproblemen bei Diesel-Kraftfahrzeugen eine Einrichtung für dosierten Luftabbau aufweist. Dieses Flüssigkeitsfilter weist einen in einem Gehäuse angeordneten Filtereinsatz auf, der zwischen einen Einlaß und einen Auslaß geschaltet ist und der ein auf der Reinseite des Filtereinsatzes angeordnetes Tauchrohr aufweist, das sich vom Auslaß nach unten erstreckt und mit dem Filtereinsatz einen Gassammelraum bildet, in dem sich mitgeführte Luft absetzen kann. Von diesem Gassammelraum wird die sich ansammelnde Luft über eine kleine Drosselöffnung im oberen Teil des Tauchrohrs in kleinen Blasen abgesaugt, die von der Einspritzausrüstung des Kraftfahrzeugs besser verarbeitet werden können und das Fahrverhalten weniger stören. Bei diesem Flüssigkeitsfilter ist das freie Ende des vom Kraftstoff durchströmten Tauchrohrs unten offen, so daß es nun vorkommen kann, daß bei ungünstigen Bedingungen immer noch größere Luftblasen vom Kraftstoffstrom über diese Öffnung zum Auslaß geschleppt werden und damit zu Störungen im Betriebsverhalten führen können. Dies gilt besonders bei einem radial durchströmten Sterneinsatz, wo der im unteren Teil des Filtereinsatzes durchfließende Kraftstoffstrom nur eine relativ geringe Umlenkung erfährt. Das Flüssigkeitsfilter ist hier nur für eine Bauart mit radial durchströmten Filtereinsatz ausgerüstet. Ungünstig ist ferner, daß der Gassammelraum unmittelbar vom Material des Filtereinsatzes mitbegrenzt wird.

Ferner wird in der älteren EP 0 579 484 A1 ein Flüssigkeitsfilter mit dosiertem Luftabbau vorgeschlagen, das lediglich nach EPÜ, Artikel 54(3) zu berücksichtigen ist. Bei diesem Flüssigkeitsfilter mit einem axial durchströmten Wickelelement ist in dessen Mittelrohr ein zusätzliches Rohr mit kleinerem Durchmesser eingebaut, so daß zwischen beiden Rohren ein nach unten offener Gassammelraum eingeschlossen ist. Das zusätzliche Rohr ist von dem auf der Reinseite zum Auslaß abfließenden Kraftstoff durchströmt, der über kleine Drosselöffnungen Luft in kleinen Blasen absaugt. Eine zentrale, außen umströmte Gasfangglocke liegt hier nicht vor.

### Vorteile der Erfindung

Das erfindungsgemäße Flüssigkeitsfilter mit den kennzeichnenden Merkmalen des Hauptanspruchs hat demgegenüber den Vorteil, daß bei ihm durch die frühzeitige Trennung von Luft und Kraftstoff eine verbesserte Entlüftung erreicht wird, so daß weniger großvolumige Blasen in das Einspritzsystem gelangen. Gerade bei empfindlich reagierenden Einspritzsystemen von Dieselmotoren kann damit das Fahrverhalten weiter verbessert werden. Zudem ist es vorteilhaft, wenn die Luft in einer Glocke mit gasundurchlässiger Wand gesammelt wird und der Gassammelraum nicht unmittelbar an das Filtermaterial grenzt. Die Maßnahmen lassen sich mit einfachen und relativ billigen Mitteln durchführen und können leicht in bereits vorhandene Filter integriert werden. Dabei läßt sich ein bereits vorhandenes Bauelement, wie das Stützblech, zusätzlich als Umlenkelement für die Strömung verwenden. Zudem eignet sich diese Lösung besonders gut für axial durchströmte Filtereinsätze.

Durch die in den Unteransprüchen aufgeführten Maßnahmen sind vorteilhafte Weiterbildungen und Verbesserungen des im Anspruch 1 angegebenen Flüssigkeitsfilters möglich, wodurch bei einfacherer und platzsparender Bauweise eine äußerst günstige und wirksame Umlenkung des Kraftstoffstromes erreicht wird. Zudem ist bei der Herstellung des Flüssigkeitsfilters eine einfache Montage möglich. Weitere vorteilhafte Ausgestaltungen ergeben sich aus der Beschreibung und der Zeichnung.

### Zeichnung

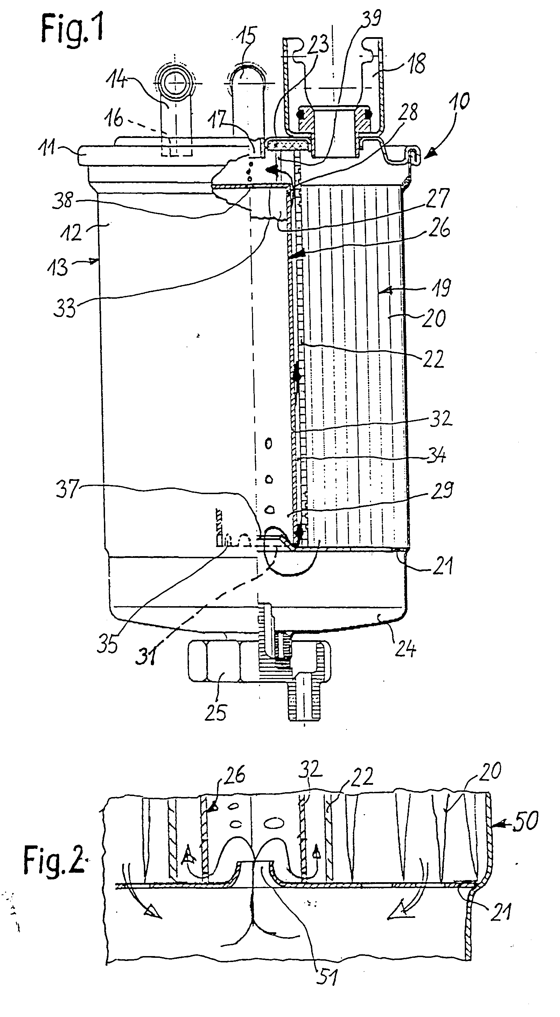

Zwei Ausführungsbeispiele der Erfindung sind in der Zeichnung dargestellt und in der nachfolgenden Beschreibung näher erläutert. Es zeigen Figur 1 einen teilweisen Längsschnitt durch ein Flüssigkeitsfilter für Dieselkraftstoff in vereinfachter Darstellung und Figur 2 einen Längsschnitt durch einen Teil eines zweiten Flüssigkeitsfilters.

### Beschreibung der Ausführungsbeispiele

Die Figur 1 zeigt in vereinfachter Darstellung einen teilweisen Längsschnitt durch ein Flüssigkeitsfilter 10 für Dieselkraftstoff, das infolge seiner Anschlußart als Leitungsfilter bezeichnet wird. Bei dem Filter 10 sind in an sich bekannter Weise ein Deckel 11 und ein becherförmiges Gehäuseteil 12 in unlösbarer und dichter Weise zu einem boxförmigen Gehäuse 13 zusammengebaut, wobei ihre Ränder miteinander verbördelt sind. Im oben liegenden Deckel 11 sind ein erster und zweiter Rohrstutzen 14 bzw. 15 befestigt und bilden einen Einlaß 16 bzw. einen Auslaß 17, wobei letzterer zentral im Deckel 11 angeordnet ist. Eine im Deckel 11 angeordnete Befestigungseinrichtung 18 dient zur Aufnahme einer hier nicht näher gezeichneten Kraftstoff-Rückführeinrichtung, welche in vorliegendem Zusammenhang nicht interessiert.

Im Inneren des Gehäuses 13 ist in an sich bekannter Weise ein axial durchströmter Filtereinsatz 19 angeordnet, der hier ein Wickelelement 20 aufweist und sich unten über eine gelochte Stützscheibe 21 im Gehäuseteil 12 abstützt und dessen Mittelrohr 22 an einer Flachdichtung 23 im Deckel 11 anliegt. Im Gehäuseteil 12 ist unterhalb der Stützscheibe 21 ein Wasserspeicherraum 24 ausgebildet der über eine Ablasschraube 25 entleerbar ist.

Im Inneren des Mittelrohres 22 ist koaxial zu letzterem eine Gasfangglocke 26 angeordnet, welche die Funktion einer dichten Trennwand zur Bildung eines Gassammelraums 27 hat. Die Gasfangglocke 26 hat ein obenliegendes, geschlossenes Ende 28, das dem Auslaß 17 zugewandt ist sowie ein untenliegendes, offenes Ende 29, das vom Auslaß 17 abgewandt ist und eine Öffnung 31 bildet. Die Gasfangglocke ist einstückig und aus Kunststoff ausgebildet und besteht im wesentlichen aus einem hohlzylindrischen Rohrteil 32, das zur Bildung des geschlossenen Endes 28 durch ein Deckelteil 33 dicht verschlossen ist. Dabei ist der Außendurchmesser des Rohrteils 32 möglichst groß gewählt, wobei er jedoch mit der Innenwand des Mittelrohrs 22 noch einen im Querschnitt ringförmigen Strömungskanal 34 bilden muß. Das Rohrteil 32 weist an seinem offenen Ende 29 in den Rand eingeformte Durchbrüche 35 auf, durch welche der Kraftstoff auf seinem Weg zum Auslaß 17 hindurchfließen kann. Im Bereich dieser Durchbrüche 35 stützt sich die Gasfangglocke 26 auf der gelochten Stützscheibe 21 ab, die im becherförmigen Gehäuseteil 12 angeordnet ist. In ihrer Mitte ist die Stützscheibe 21 kegelförmig eingebogen und weist dort einen kreisrunden, zentrisch liegenden Durchlaß 37 auf, über welchen die Gasfangglocke 26 mit ihrem offenen Ende 29 gestülpt ist. Ferner hat die Gasfangglocke 26 im Bereich des Deckelteils 33 eine zentrisch liegende Drosselöffnung 38, die für einen dosierten Luftabbau vorgesehen ist. An dem Deckelteil 33 schließen sich abstandshalternde Rippen 39 an, über welche sich die Gasfangglocke 26 an der Flachdichtung 23 so abstützt, daß der ringförmige Strömungskanal 34 mit dem Auslaß 17 Verbindung hat.

Die Wirkungsweise des Flüssigkeitsfilters 10 wird wie folgt erläutert, wobei nur soweit auf die Funktion eingegangen wird, als zum Verständnis der Erfindung notwendig ist.

Die Einspritzausrüstung von Dieselmotoren, insbesondere bei PKW-Dieselmotoren, reagiert häufig sehr empfindlich auf mittel- bis großvolumige Luftblasen, die zusammen mit dem Kraftstoff angesaugt werden. Dagegen kann das Einspritzsystem kleine oder sehr kleine Luftblasen verarbeiten, ohne daß merkliche Änderungen im Motorverhalten auftreten. Mit Hilfe der eingebauten Gasfangglocke 26 in Verbindung mit der Stromumlenkung wird nun erreicht, daß keine großvolumigen Blasen in das Einspritzsystem gelangen und zu Störungen im Fahrverhalten führen. Der zu reinigende Kraftstoff gelangt über den Einlaß 16 in das Innere des Gehäuses 13 und durchströmt axial von oben nach unten den Filtereinsatz 19 und strömt anschließend von unten her in das Mittelrohr 22 ein. Dabei wird der gereinigte Kraftstoffstrom gezwungen, durch den kreisrunden Durchlaß 37 in der Stützscheibe 21 hindurch von unten her in die Gasfangglocke 26 einzuströmen. Im Bereich des offenen Endes 29 der Gasfangglocke 26 wird nun der Kraftstoffstrom umgelenkt und fließt durch die Durchbrüche 35 radial nach außen hinein in den ringförmigen Strömungskanal 34. Über den Strömungskanal 34 strömt der Kraftstoff nach oben und vorbei an den Rippen 39 zum Auslaß 17. Infolge der Strömungsumlenkung am unteren Ende der Gasfangglocke 26 und in Verbindung mit dem Auftrieb wird dabei die gelöste Luft in der Gasfangglocke 26 ausgeschieden, steigt nach oben und sammelt sich im Gassammelraum 27. Von dem oben liegenden Gassammelraum 27 wird nun über die kleine Drosselöffnung 38, deren Durchmesser z.B. 0,3 mm bis 1 mm betragen kann, kontinuierlich Luft in kleinen Bläschen abgesaugt und vom Kraftstoffstrom in den Auslaß 17 mitgerissen. Auf diese Weise treten nur kleine oder sehr kleine Luftblasen im Kraftstoffstrom auf, welche keine Fahrverhaltensstörungen mehr hervorrufen. Insbesondere wird durch die mehrfache Umlenkung des Kraftstoffstromes am offenen Ende 29 der Gasfangglocke 26 vermieden, daß größere Luftblasen, die sich auf der Schmutzseite des Filters ansammeln können, beim Gasgeben schlagartig in das Einspritzsystem gelangen. Durch die axial lang bauende Gasfangglocke wird zudem in vorteilhafter Weise erreicht, daß die Trennung von Luft und Kraftstoff im Strom frühzeitig erfolgt und auch kleinste Bläschen in der strömungsberuhigten Gasfangglocke sicher ausgeschieden werden. Zudem ist es zweckmäßig, daß der Gassammelraum 27 allseitig von einer dichten Trennwand umgeben ist, so daß abgeschiedene Luft und/oder Gas sicher abgeführt werden.

Die Figur 2 zeigt in vereinfachter Form einen Längsschnitt durch einen kleinen Teil eines zweiten Flüssigkeitsfilters 50, der sich vom ersten Flüssigkeitsfilter 10 nach Figur 1 lediglich dadurch unterscheidet, daß in der Stützscheibe 21 der zentrale, kreisrunde Durchlaß 37 durch einen hochgezogenen Kragen 51 gebildet wird, so daß ein düsenförmiger Durchlaß entsteht. Auf diese Weise wird ein stärkeres Einströmen des Druckmittelstromes in die Gasfangglocke 26 erreicht, womit eine bessere Luftausscheidung verbunden ist.

Selbstverständlich sind an den gezeigten Ausführungsformen Änderungen möglich, ohne vom Gedanken der Erfindung abzuweichen. Obwohl die hohlzylindrisch ausgebildete Gasfangglocke 26 besonders einfach und kostengünstig baut, kann deren Funktion auch von einer anderen dichten Trennwand übernommen werden, die innerhalb des Filtereinsatzes bzw. des Mittelrohrs einen Gassammelraum bildet und außen umströmt wird. Die Gasfangglocke kann anstelle des kreisrunden Querschnitts selbstverständlich auch einen anderen Querschnitt aufweisen. Ebenso läßt sich die Ausbildung des Umlenkelements an der Stützscheibe variieren, um eine mehr oder weniger starke Umlenkung zu erreichen. Besonders günstig im Zusammenhang mit einem axial durchströmten Wickeleinsatz ist der Umstand, daß Gasfangglocke und Mittelrohr auch einteilig ausgebildet werden können. Auch läßt sich die im Zusammenhang mit Flüssigkeitsfiltern für Dieselkraftstoff dargestellte Einrichtung zum dosierten Luftabbau auch auf Benzinfilter übertragen, wo neben Luftblasen auch Gasblasen abgebaut werden müssen, die vor allem durch Verdampfen von Kraftstoff unter Temperatureinwirkung entstehen. Auch ist die aufgezeigte Einrichtung nicht auf die dargestellte Leitungsfilterbauart beschränkt, sondern läßt sich auch bei anderen Filterbauarten anwenden. Ferner ist es auch möglich, daß sich die Gasfangglocke nicht über die gesamte axiale Länge des Filterelements erstreckt, sondern nur über einen Teil derselben. Anstelle der einzigen Drosselöffnung können auch mehrere Drosselöffnungen vorgesehen werden, wobei zudem deren Anordnung im Gassammelraum variiert werden kann, wobei eine Drosselöffnung auch im Rohrteil liegen kann.

## Patentansprüche

1. Flüssigkeitsfilter für Kraftstoff, insbesondere Dieselkraftstoff, mit einem Gehäuse, das neben einem Einlaß für den Kraftstoff einen im Gehäuse oben liegenden Auslaß aufweist, und mit einem im Gehäuse angeordneten Filtereinsatz, der sich vom Auslaß nach unten erstreckt, und so angeordnet ist, daß er in den zu reinigenden Kraftstoff-Strom zwischen Einlaß und Auslaß geschaltet ist, und mit einer unterhalb vom Auslaß sich erstreckenden, dichten Trennwand, die stromabwärts vom Filtereinsatz auf dessen Reinseite angeordnet ist und zur Bildung eines Gassammelraums dient, der über mindestens eine in der Trennwand angeordnete Drosselöffnung zur gezielten Gasabführung mit dem Auslaß in Verbindung steht und bei dem die Trennwand unten mindestens eine Öffnung aufweist, an der vorbei der Kraftstoff-Strom zum Auslaß geführt wird, dadurch gekennzeichnet, daß die unterhalb des Auslasses (17) angeordnete Trennwand als Gasfangglocke (26) ausgebildet ist, deren geschlossenes Ende (28) oben und somit dem Auslaß (17) zugewandt liegt, während ihr offenes, die Öffnung (31) bildendes Ende (29) unten und somit vom Auslaß (17) abgewandt liegt, daß im Bereich des oberen Endes (28) der Gasfangglocke (26) die mindestens eine Drosselöffnung (38) angeordnet ist, die mit dem Gassammelraum (27) Verbindung hat, daß der Kraftstoff-Strom im Bereich der unteren Öffnung (31) der Gasfangglocke (26) eine die Gasausscheidung unterstützende Umlenkung erfährt und anschließend außen um die Gasfangglocke (26) herum zum Auslaß (17) geführt wird.

2. Flüssigkeitsfilter nach Anspruch 1, dadurch gekennzeichnet, daß der Filtereinsatz (19) als ein axial duchströmtes Wickelelement (20) mit einem Mittelrohr (22) ausgebildet ist und daß die Gasfangglocke (26) im Mittelrohr (22) angeordnet ist.

3. Flüssigkeitsfilter nach Anspruch 1 oder 2, dadurch gekennzeichnet, daß sich die Gasfangglocke (26) im wesentlichen über die gesamte axiale Länge des Wickelelements (20) erstreckt.

4. Flüssigkeitsfilter nach einem der Ansprüche 1 bis 3, dadurch gekennzeichnet, daß der Filtereinsatz (19) sich im Gehäuse (13) auf einer Stützscheibe (21) abstützt, die einen zentralen, zur Durchführung des Kraftstoff-Stroms dienenden Durchlaß (37) aufweist und daß die Gasfangglocke (26) mit ihrem offenen Ende (29) über diesen Durchlaß (37) gestülpt ist.

5. Flüssigkeitsfilter nach einem der Ansprüche 1 bis 4, dadurch gekennzeichnet, daß die Gasfangglocke (26) im wesentlichen als hohlzylindrisches Rohrteil (32) mit einem dicht abschließenden Deckelteil (33) ausgebildet ist, wobei das Rohrteil (32) mit dem Mittelrohr (22) einen im Querschnitt ringförmigen Strömungskanal (34) bildet, dessen Durchmesser größer ist als derjenige des Durchlasses (37) in der Stützscheibe (21).

6. Flüssigkeitsfilter nach einem oder mehreren der Ansprüche 1 bis 5, dadurch gekennzeichnet, daß die Gasfangglocke (26) einstückig ausgebildet ist und sich axial innerhalb des Gehäuses (13) abstützt, insbesondere zwischen Gehäuse-Deckel (11) und Stützscheibe (21).

7. Flüssigkeitsfilter nach Anspruch 6, dadurch gekennzeichnet, daß die Gasfangglocke (26) am offenen Ende (29) liegende Durchbrüche (35) aufweist und an ihrem geschlossenen Ende (28) zur Abstandshalterung dienende Stützrippen (39) hat.

8. Flüssigkeitsfilter nach einem der Ansprüche 1 bis 8, dadurch gekennzeichnet, daß die Gasfangglocke (26) aus Kunststoff besteht.

9. Flüssigkeitsfilter nach einem der Ansprüche 4 bis 8, dadurch gekennzeichnet, daß der Durchlaß (37) durch einen überstehenden Kragen (51) düsenformig ausgebildet ist.

10. Flüssigkeitsfilter nach einem der Ansprüche 1 bis 9, dadurch gekennzeichnet, daß die Gasfangglocke und das Mittelrohr einteilig ausgebildet sind.

## Claims

1. Liquid filter for fuel, especially diesel fuel, with a housing which, in addition to an inlet for the fuel, has an outlet situated at the top in the housing, and with a filter insert which is arranged in the housing and extends downwards from the outlet and is arranged in such a way that it is inserted between the inlet and the outlet into the fuel flow to be cleaned, and with a leaktight dividing wall which extends underneath the outlet and is arranged downstream of the filter insert, on the clean side of the latter, and serves to form a gas-collecting space which is connected to the outlet via at least one restrictor opening arranged in the dividing wall and serving the purpose of controlled gas discharge and in which the dividing wall has, at the bottom, at least one opening, past which the fuel flow is guided to the outlet, characterized in that the dividing wall arranged below the outlet (17) is designed as a gas-collecting bell (26), the closed end (28) of which lies at the top and is thus adjacent to the outlet (17), while its open end (29), that forming the opening (31), lies at the bottom and thus remote from the outlet (17), in that the restrictor opening or openings (38), which is connected to the gas-collecting space (27), is/are arranged in the region of the upper end (28) of the gas-collecting bell (26), in that the fuel flow in the region of the bottom opening (31) of the gas-collecting bell (26) undergoes a deflection which assists the elimination of the gas and then is guided around the outside of the gas-collecting bell (26) to the outlet (17).

2. Liquid filter according to Claim 1, characterized in that the filter insert (19) is designed as an axial-flow wound element (20) with a central tube (22) and in that the gas-collecting bell (26) is arranged in the central tube (22).

3. Liquid filter according to Claim 1 or 2, characterized in that the gas-collecting bell (26) extends essentially over the entire axial length of the wound element (20).

4. Liquid filter according to one of Claims 1 to 3, characterized in that the filter insert (19) is supported in the housing (13) on a supporting disc (21) which has a central passage (37) serving for the passage of the fuel flow and in that the gas-collecting bell (26) is placed with its open end (29) over this passage (37).

5. Liquid filter according to one of Claims 1 to 4, characterized in that the gas-collecting bell (26) is designed essentially as a hollow-cylindrical tubular part (32) with a cover part (33) which provides a leaktight closure, the tubular part (32) forming, with the central tube (22), a flow channel (34) of annular cross-section, the diameter of which is larger than that of the passage (37) in the supporting disc (21).

6. Liquid filter according to one or more of Claims 1 to 5, characterized in that the gas-collecting bell (26) is of one-piece design and is supported axially within the housing (13), in particular between the housing cover (11) and the supporting disc (21).

7. Liquid filter according to Claim 6, characterized in that the gas-collecting bell (26) has apertures (35) situated at the open end (29) and, at its closed end (28), has supporting ribs (39) which serve the purpose of spacing.

8. Liquid filter according to one of Claims 1 to 8, characterized in that the gas-collecting bell (26) is composed of plastic.

9. Liquid filter according to one of Claims 4 to 8, characterized in that the passage (37) is formed as a nozzle by a projecting collar (51).

10. Liquid filter according to one of Claims 1 to 9, characterized in that the gas-collecting bell and the central tube are of one-piece design.

## Revendications

1. Filtre pour carburant liquide, en particulier pour carburant de moteur Diesel, comportant un boîtier, qui présente outre un orifice d'entrée pour le carburant un orifice de sortie se trouvant en haut dans le boîtier, et une cartouche de filtre, disposée dans le boîtier, qui s'étend depuis l'orifice de sortie vers le bas et est disposée de telle façon qu'elle est montée dans le courant de carburant à purifier entre l'orifice d'entrée et l'orifice de sortie, et une paroi de séparation étanche, qui s'étend en dessous de l'orifice de sortie, et qui est disposée en aval de la cartouche du filtre sur son côté purifié et sert à former un espace collecteur pour les gaz, qui est en liaison par au moins un orifice d'étranglement disposé dans la cloison de séparation avec l'orifice de sortie pour l'évacuation voulue des gaz et grâce à quoi la cloison de séparation présente en bas au moins une ouverture, devant laquelle passe le courant de carburant se dirigeant vers l'orifice de sortie,
caractérisé en ce que
- la cloison de séparation, disposée en dessous de l'orifice de sortie (17), est constituée sous la forme d'une cloche de captage des gaz (26), dont l'extrémité fermée (28) se trouve en haut et est de cette façon tournée vers l'orifice de sortie (17), pendant que son extrémité (29) ouverte formant l'ouverture (31) se trouve en bas et ainsi est tournée vers l'orifice de sortie (17),
- dans la zone de l'extrémité (28) supérieure de la cloche de captage des gaz (26) est disposé au moins un orifice d'étranglement (38) qui est en liaison avec le collecteur des gaz (27),
- le courant de carburant subit dans la zone de l'ouverture inférieure (31) de la cloche de captage des gaz (26) une déviation qui favorise la séparation des gaz et ensuite passez à l'extérieur autour de la cloche de captage des gaz vers l'orifice de sortie (17).

2. Filtre pour carburant liquide selon la revendication 1,
caractérisé en ce que
- la cartouche du filtre (19) est constituée sous la forme d'un élément enroulé (20) parcouru axialement par le carburant avec un tuyau central (22), et
- la cloche de captage des gaz (26) est disposée dans le tuyau central (22).

3. Filtre pour carburant liquide selon la revendication 1 ou 2,
caractérisé en ce que
la cloche de captage des gaz (26) s'étend sensiblement sur toute la longueur axiale de l'élément enroulé (20).

4. Filtre pour carburant liquide selon l'une des revendications 1 à 3,
caractérisé en ce que
- la cartouche du filtre (19) prend appui dans le boîtier (13) sur un disque de soutien (21), qui présente un orifice de passage central (37), qui sert à faire passer le courant de carburant, et
- la cloche de captage des gaz (26) est sertie par son extrémité ouverte (29) sur ce passage (37).

5. Filtre pour carburant liquide selon l'une des revendications 1 à 4,
caractérisé en ce que
la cloche de captage des gaz (26) est constituée sensiblement sous la forme d'une pièce tubulaire (32) cylindrique creuse avec une pièce de couvercle (33) fermant de façon étanche, la pièce tubulaire (32) formant avec le tuyau central (22) un canal d'écoulement (34) de forme annulaire en section transversale, dont le diamètre est plus grand que celui de l'orifice de passage (37) dans le disque de soutien (21).

6. Filtre pour carburant liquide selon une ou plusieurs des revendications 1 à 5,
caractérisé en ce que
la cloche de captage des gaz est constituée d'une seule pièce et prend appui axialement à l'intérieur du boîtier (13), en particulier entre le couvercle du boîtier (11) et le disque de soutien (21).

7. Filtre pour carburant liquide selon la revendication 6,
caractérisé en ce que
la cloche de captage des gaz (26) présente des ajoures (35) se trouvant à l'extrémité ouverte (29) et à son extrémité fermée (28) a des nervures d'appui (39) servant à maintenir l'écartement.

8. Filtre pour carburant liquide selon l'une des revendications 1 à 8,
caractérisé en ce que
la cloche de captage des gaz (26) est en matière plastique.

9. Filtre pour carburant liquide selon l'une des revendications 4 à 8,
caractérisé en ce que
l'orifice de passage (37) est constitué par un collet (51) en forme de buse, qui est étiré vers le haut.

10. Filtre pour carburant liquide selon l'une des revendications 1 à 9,
caractérisé en ce que
la cloche de captage des gaz et le tuyau central sont constitués d'une seule pièce.
